# EUROPÄISCHE PATENTSCHRIFT

(11) **EP 0 653 582 B1**
(45) Veröffentlichungstag und Bekanntmachung des Hinweises auf die Patenterteilung: **09.12.1998**
(21) Anmeldenummer: 94117198.5
(22) Anmeldetag: 31.10.1994
(51) Int. Cl.: F16K 27/00, F15B 13/00

(54) **Ventilkombination**
Valve combination
Combinaison de soupapes

(30) Priorität: 16.11.1993 DE 4339165
(43) Veröffentlichungstag der Anmeldung: 17.05.1995
(60) Teilanmeldung: 97116997.4
(73) Patentinhaber: Bürkert Werke GmbH & Co., D-74653 Ingelfingen (DE)
(72) Erfinder: Pieloth, Manfred, D-01069 Dresden-Mitte (DE); Schrepel, Dieter Dr., D-01468 Friedwald (DE); Töpfer, Heinz Prof. Dr., D-01277 Dresden (DE)
(74) Vertreter: Degwert, Hartmut, Dipl.-Phys.

(56) Entgegenhaltungen:
- DD-A- 49 565
- DE-A- 2 520 836
- DE-A- 4 111 537
- FR-A- 2 522 085
- GB-A- 2 181 821

## Beschreibung

Die Erfindung betrifft eine Ventilkombination aus mehreren miteinander kombinierbaren Ventilmoduln.

Ventile werden in verschiedenen Größen für verschiedene Durchflüsse und Druckbereiche angeboten. Üblicherweise wird für jeden Anwendungsfall ein Ventil mit passenden Kenndaten für Durchfluß, Druckbereich, Ansteuerleistung usw. ausgewählt. Die Anbieter von Ventilen müssen daher ein großes Sortiment für alle gängigen Anwendungen bereithalten.

Um einen großen Durchfluß mit einer geringen Steuer leistung schalten zu können, werden vorgesteuerte Ventile verwendet. Bei herkömmlichen vorgesteuerten Ventilen ist das Vorsteuerventil in die Konstruktion integriert. Auch bei vorgesteuerten Ventilen sind daher für verschiedene Kenndaten verschiedene Baugrößen und Konstruktionen erforderlich.

Der Erfindung liegt die Aufgabe zugrunde, mit einer geringen Anzahl von Ventilgrößen und -konstruktionen ein breites Spektrum von Ventilkenndaten abzudecken. Die Erfindung schlägt eine Ventilkombination aus mehreren miteinander kombinierbaren Ventilmoduln vor, zu denen ein Vorsteuerventil - als 3/2-Wegeventil -, wenigstens ein Durchflußverstärker - als 3/2-Wegeventil - und ein Schaltelement - als 5/2-Wegeventil - gehören, worin das Schaltelement durch das Vorsteuerventil ansteuerbar ist, der Durchflußverstärker durch das Vorsteuerventil ansteuerbar ist, das Schaltelement über den Durchflußverstärker durch das Vorsteuerventil ansteuerbar ist, und schließlich der Durchflußverstärker ohne nachfolgendes Schaltelement unmittelbar als Ventil betreibbar ist. Mit lediglich drei Typen von Ventilmoduln wird ein modulares Ventilsystem geschaffen, das sich durch einfachen Aufbau, kompakte Bauform, einfache und rationelle Herstellung sowie ein großes Maß von Anpaßbarkeit an die geforderten Kenndaten auszeichnet. Für geringen Durchfluß kann das Vorsteuerventil als direkt schaltendes Ventil allein verwendet werden. Wird ein größerer Durchfluß bei geringer Schaltleistung verlangt, so wird das Vorsteuerventil mit einem Durchflußverstärker kombiniert. Für großen Durchfluß bei sehr kleiner Ansteuerleistung folgt auf das Vorsteuerventil der Durchflußverstärker, der seinerseits das Schaltelement ansteuert. Das Schaltelement kann aber auch nur über den Durchflußverstärker angesteuert werden, wenn ein ansteuernder Medienstrom ausreichender Größe zur Verfügung steht. Schließlich ist es auch möglich, das Schaltelement unmittelbar durch das Vorsteuerventil anzusteuern, wenn keine große Schaltgeschwindigkeit gefordert wird.

Die Medienverbindungen zwischen den in der Kombination verwendeten Ventilmoduln wird gemäß der bevorzugten Ausführungsform dadurch bewerkstelligt, daß korrespondierende Öffnungen in aneinandergefügten Gehäuseflächen der Ventilmoduln bei der Montage in Deckung gebracht werden. Auf diese Weise entfällt jeder Aufwand zur Verschaltung der Ventilmoduln miteinander.

Gemäß einer weiteren vorteilhaften Ausführungsform bestehen Durchflußverstärker und Schaltelement aus prinzipiell gleich aufgebauten Doppelmembranventilen, wobei in dem Schaltelement zwei dieser Doppelmembranventile vorgesehen sind, von denen eines wie der Durchflußverstärker und eines umgekehrt zum Durchflußverstärker wirkt. Das Doppelmembranventil hat folgenden Aufbau:
- in einem Ventilgehäuse sind zwei durch einen Kanal verbundene Dichtsitze mit ihren Dichtflächen voneinander fortweisend angeordnet;
- den Dichtsitzen sind zwei starr miteinander gekoppelte Schließkörper zugeordnet, von denen jeweils der eine den zugeordneten Dichtsitz schließt, während der andere den zugeordneten Dichtsitz öffnet;
- jeder Schließkörper ist in einer Ventilkammer angeordnet und an einer Membran eingespannt, welche diese Ventilkammer in zwei Abschnitte unterteilt.

Ein Doppelmembranventil dieser Bauart ist an sich aus der DD 49 565 bekannt, wird dort jedoch lediglich als pneumatisches logisches Schaltglied beschrieben. Durch Anwendung dieser Bauform auf die erfindungsgemäße Ventilkombination sind eine hohe Zuverlässigkeit, kurze Schaltzeiten, hohe Schalthäufigkeit und große Standfestigkeit bei verschiedenen Medien erzielbar.

Weitere Merkmale und Vorteile der Erfindung ergeben sich aus der folgenden Beschreibung und aus der Zeichnung, auf die Bezug genommen wird. In der Zeichnung zeigen:
Fig. 1 sehr schematisch verschiedene mit A, B, C und D bezeichnete Kombinationen aus drei verschiedenen Ventilmoduln; Fig. 2 eine schematische Schnittansicht eines Vorsteuerventils, das einen der Ventilmoduln bildet;
Fig. 3 eine schematische Schnittansicht eines Durchflußverstärkers, der einen weiteren Ventilmodul bildet;
Fig. 4 eine schematische Schnittansicht eines Schaltelements, das einen dritten Ventilmodul bildet;
Fig. 5 eine Schnittansicht des Schaltelements senkrecht zur Schnittebene der Fig. 4;
Fig. 6 eine erste Ventilkombination, die aus einem Vorsteuerventil und einem Durchflußverstärker besteht;
Fig. 7 eine zweite Ventilkombination, die aus einem Durchflußverstärker und einem Schaltelement besteht;
Fig. 8 eine dritte Ventilkombination, die aus einem Vorsteuerventil und einem Schaltelement besteht; und
Fig. 9 eine Ventilkombination aus Vorsteuerventil, Durchflußverstärker und Schaltelement.

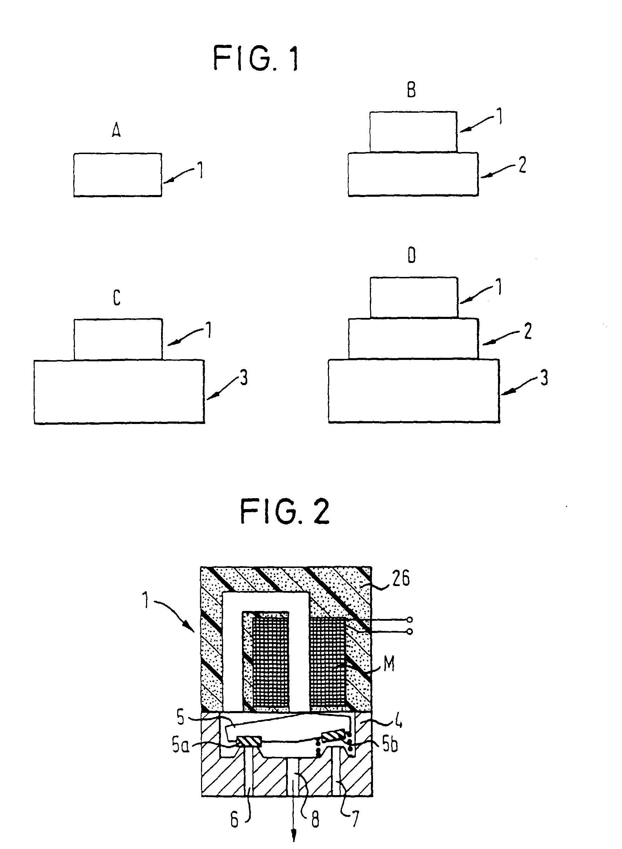

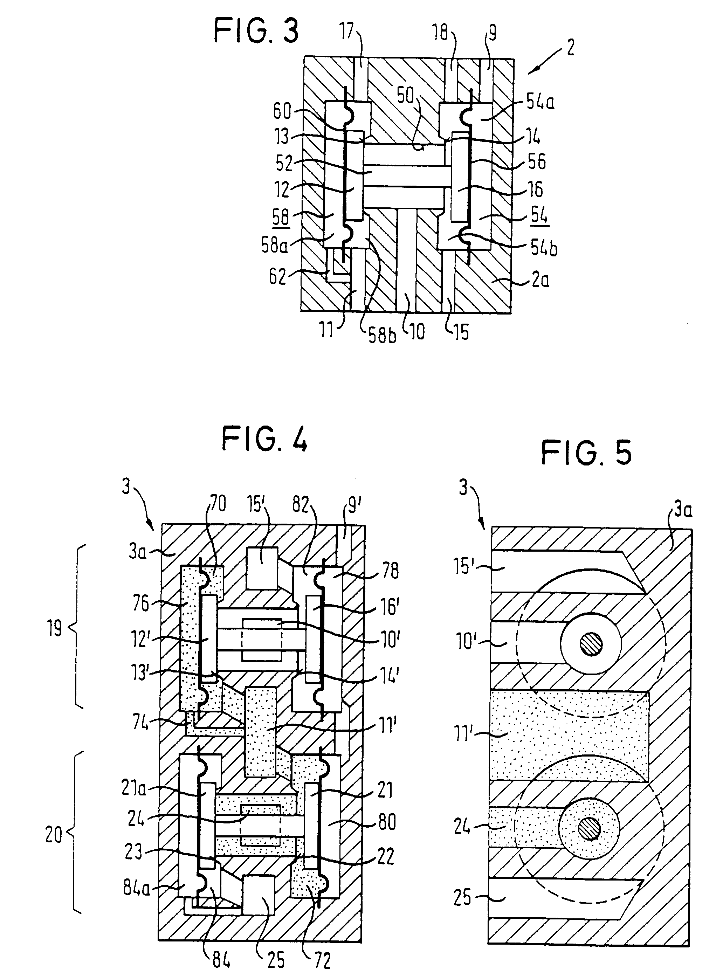

In Fig. 1 sind vier Kombinationen A, B, C und D von Ventilmoduln 1, 2 und 3 dargestellt, die weiter unten näher beschrieben werden. Bei dem Ventilmodul 1 handelt es sich um das in Fig. 2 dargestellte Vorsteuerventil; bei dem Ventilmodul 2 handelt es sich um den in Fig. 3 dargestellten Durchflußverstärker; Ventilelement 3 ist ein Schaltelement, das in den Fig. 4 und 5 dargestellt ist. Bei der Kombination A wird also das Vorsteuerventil allein als direktwirkendes Ventil für geringen Durchfluß verwendet. Bei der Kombination B folgt auf das Vorsteuerventil 1 ein Durchflußverstärker 2, so daß mit der geringen Ansteuerleistung des Vorsteuerventils ein größerer Durchfluß geschaltet werden kann. Bei der Kombination C ist das Vorsteuerventil 1 einem Schaltelement 3 zugeordnet, welches einen großen Durchfluß schaltet, als 5/2-Wegeventil arbeitet und einen geringen Medienstrom zur Ansteuerung benötigt, der von dem Vorsteuerventil 1 aufgebracht werden kann. In der Ventilkombination D schließlich folgt auf das Vorsteuerventil 1 der Durchflußverstärker 2, der seinerseits das Schaltelement 3 ansteuert, wodurch eine höhere Schaltgeschwindigkeit erreichbar ist.

Das in Fig. 2 gezeigte Vorsteuerventil ist ein Kleinventil mit einer in einem Gehäuseteil 4 schwenkbar gelagerten Schaltwippe 5, die alternativ den einen oder anderen von zwei Medienanschlüssen 6 und 7 öffnet. In die im Inneren des Gehäuseteils 4 gebildete Ventilkammer mündet unmittelbar ein ungesteuerter Ausgangsanschluß 8. Die Schaltwippe 5 trägt zwei Schließkörper 5a und 5b, die mit zugeordneten Dichtsitzen zusammenwirken, welche an den Mündungsöffnungen der Medienanschlüsse 6 und 7 im Inneren des Gehäuseteils 4 gebildet sind. Die Schaltwippe 5 wird durch einen Elektromagnet M betätigt, der auf die offene Seite des Gehäuseteils 4 aufgesetzt und mit einer Umspritzung 26 versehen ist. Durch eine Druckfeder wird der Schließkörper 5b bei unbetätigtem Elektromagnet M von dem entsprechenden Dichtsitz abgehoben und zugleich der Schließkörper 5a gegen den zugeordneten Dichtsitz angedrückt. Bei erregtem Elektromagnet M wird entgegen der Kraft dieser Druckfeder der Schließkörper 5b gegen den entsprechenden Dichtsitz gedrückt, und der Schließkörper 5a wird von dem entsprechenden Dichtsitz abgehoben.

Der in Fig. 3 gezeigte Durchflußverstärker besteht aus einem quaderförmigen Ventilgehäuse 2a, in dessen Innerem ein Doppelmembranventil ausgebildet ist. In dem Ventilgehäuse 2a sind zwei durch einen Kanal 50 miteinander verbundene Dichtsitze 13, 14 mit ihren Dichtflächen voneinander fortweisend angeordnet. Diesen Dichtsitzen 13, 14 sind zwei durch einen Stift 52 starr miteinander verbundene Schließkörper 12, 16 zugeordnet, von denen jeweils der eine den zugeordneten Dichtsitz schließt, während der andere den zugeordneten Dichtsitz öffnet. Der Schließkörper 16 ist in einer ersten Ventilkammer 54 angeordnet und an einer Membran 56 eingespannt, welche die Ventilkammer 54 in zwei Ventilkammerabschnitte 54a und 54b unterteilt. In gleicher Weise ist der Schließkörper 12 in einer Ventilkammer 58 angeordnet und an einer Membran 60 eingespannt, welche die Ventilkammer 58 in zwei Ventilkammerabschnitte 58a und 58b unterteilt. Der Kanal 50 ist mit einem Ausgangsanschluß 10 verbunden. Der Ventilkammerabschnitt 54a ist mit einem Eingangsanschluß 9 für den zu verstärkenden Medienstrom verbunden. Aus dem Ventilkammerabschnitt 54b sind zwei Rückflußanschlüsse 15, 18 herausgeführt. Aus dem Ventilkammerabschnitt 58b sind zwei Medienanschlüsse 11, 17 für einen zu schaltenden Medienstrom herausgeführt, wobei der Medienanschluß 11 ferner über einen abgezweigten Kanal 62 mit dem Ventilkammerabschnitt 58a verbunden ist.

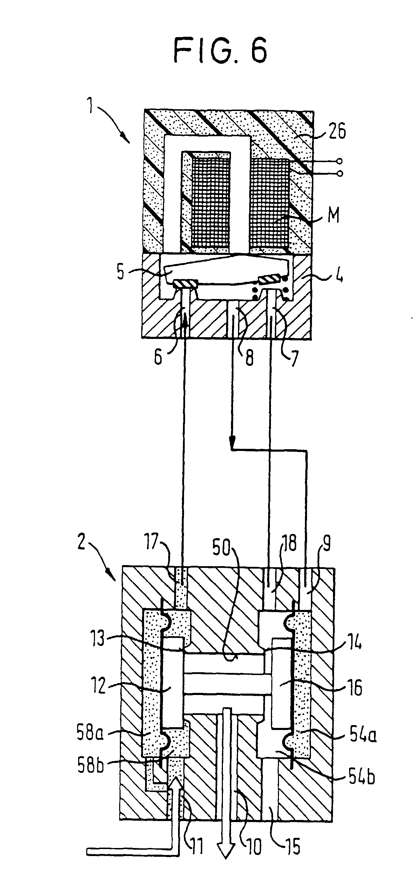

Die Wirkungsweise dieses Durchflußverstärkers wird weiter unten anhand der Fig. 6 erläutert.

Die Fig. 4 und 5 schließlich zeigen das Schaltelement 3, welches aus zwei im Inneren eines quaderförmigen Gehäuses 3a angeordneten Doppelmembranventilen 19 und 20 gleicher Art wie das Doppelmembranventil des Durchflußverstärkers nach Fig. 3 aufgebaut ist. Das Doppelmembranventil 19 umfaßt die beiden jeweils an einer Membran eingespannten und starr miteinander verbundenen Schließkörper 12' und 16'. Das Doppelmembranventil 20 umfaßt die beiden jeweils an einer Membran eingespannten und starr miteinander verbundenen Schließkörper 21 und 21a, die mit Dichtsitzen 22 bzw. 23 zusammenwirken. Der zwischen den beiden Schließkörpern 12' und 16' gebildete Kanal ist mit einem ersten Ausgangsanschluß 10' verbunden; der zwischen den Schließkörpern 21 und 21a gebildete Kanal ist mit einem zweiten Ausgangsanschluß 24 verbunden. Etwa in der Mitte des Ventilgehäuses 3a ist eine Verteilerkammer 11' gebildet, die zugleich einen Anschluß für das zu schaltende Medium bildet. Diese Verteilerkammer 11' ist mit zwei einander gegenüberliegenden, innenseitigen Ventilkammerabschnitten 70 und 72 der Doppelmembranventile 19, 20 verbunden. Über einen abgezweigten Kanal 74 ist auch der dem Ventilkammerabschnitt 70 gegenüberliegende Ventilkammerabschnitt 76 mit der Verteilerkammer 11' verbunden. Die beiden außenseitigen, einander benachbart liegenden Ventilkammerabschnitte 78 und 80 der Doppelmembranventile 19, 20 sind miteinander und mit einem Ansteueranschluß 9' für einen ansteuernden Medienstrom verbunden. Der dem Ventilkammerabschnitt 78 gegenüberliegende Ventilkammerabschnitt 82 ist mit einem aus dem Ventilgehäuse 3a herausgeführten Rückflußanschluß 15' verbunden. Mit einem weiteren Rückflußanschluß 25 ist der dem Dichtsitz 23 benachbarte Ventilkammerabschnitt 84 und der Ventilkammerabschnitt 84a verbunden.

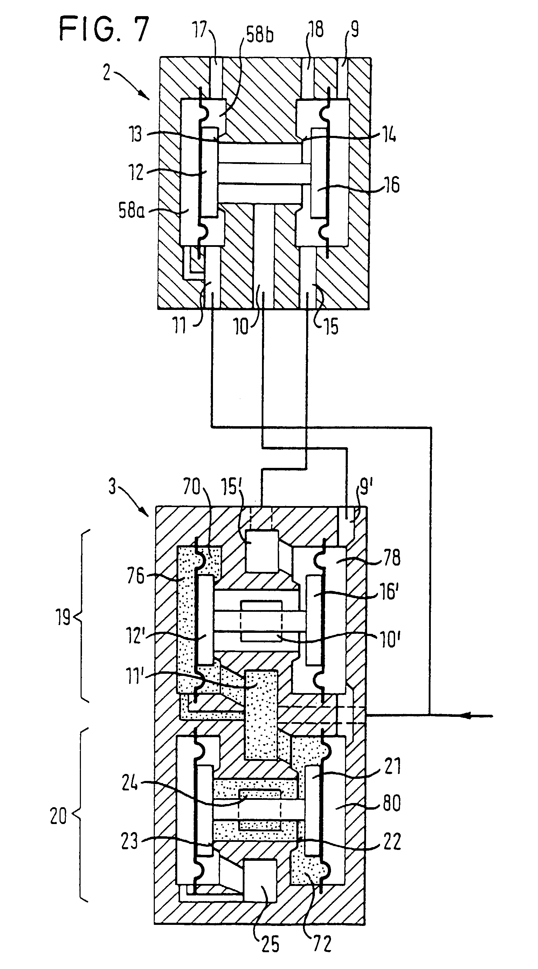

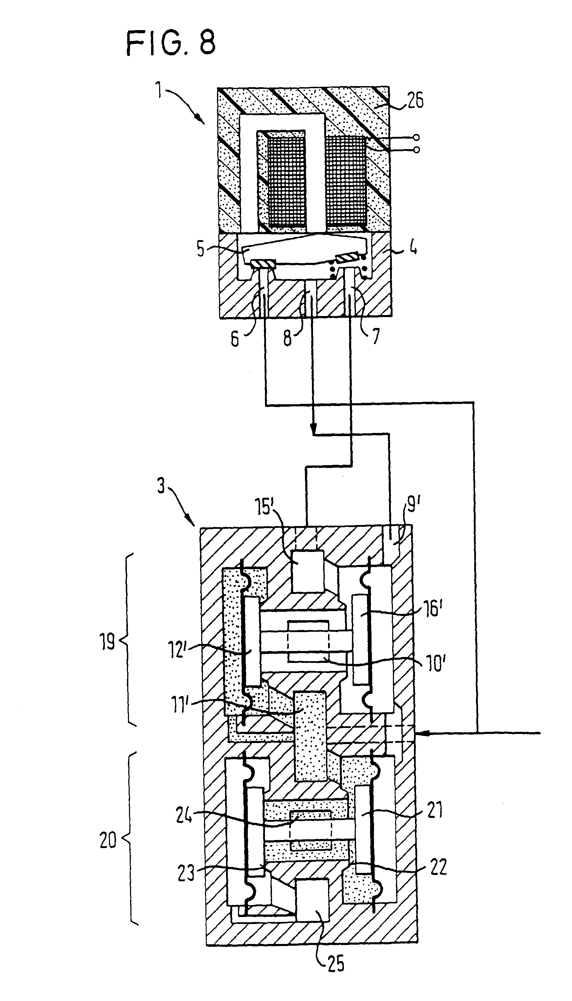

Die Wirkungsweise dieses Schaltelements 3 wird weiter unten anhand der Fig. 7 und 8 beschrieben.

Es wird nun auf Fig. 6 Bezug genommen. Dem Anschluß 11 des Durchflußverstärkers 2 wird das zu schaltende Medium, beispielsweise ein Luftstrom, zugeführt. Dieser beaufschlagt beide Ventilkammerabschnitte 58a und 58b. Der Anschluß 17 des Durchflußverstärkers 2 ist mit dem Medienanschluß 6 des Vorsteuerventils 1 verbunden. Der Ausgangsanschluß 8 des Vorsteuerventils 1 ist mit dem Anschluß 9 des Durchflußverstärkers für den zu verstärkenden Medienstrom verbunden. Der aus dem Ventilkammerabschnitt 54b herausgeführte Rückflußanschluß 18 des Durchflußverstärkers 2 ist mit dem zweiten Medienanschluß 7 des Vorsteuerventils 1 verbunden. Schließlich bildet der aus dem Kanal 50 herausgeführte Anschluß 10 des Durchflußverstärkers 2 den Ausgang für den verstärkten Medienstrom.

Bei dem in Fig. 6 gezeigten Schaltzustand wird der Schließkörper 12 durch den über den Anschluß 11 zugeführten Medienstrom gegen den Dichtsitz 13 gedrückt; zugleich wird der Schließkörper 16 von dem Dichtsitz 14 abgehoben. Wenn nun der Elektromagnet M erregt wird, öffnet die Schaltwippe 5 den Medienanschluß 6, wodurch ein kleiner Medienstrom über den Ausgangsanschluß 8 zu dem Anschluß 9 des Durchflußverstärkers 2 fließt. Durch diesen Medienstrom wird der Druck in dem Ventilkammerabschnitt 54a erhöht, wodurch der Schließkörper 16 gegen den Dichtsitz 14 gedrückt wird. Zugleich wird der Schließkörper 12 von dem Dichtsitz 13 abgehoben, so daß eine Strömungsverbindung zwischen dem Ventilkammerabschnitt 58b und dem Kanal 50 entsteht und ein verstärkter Medienstrom am Ausgangsanschluß 10 austritt.

Bei der in Fig. 7 gezeigten Ventilkombination ist der Ausgangsanschluß 10 des Durchflußverstärkers 2 mit dem Ansteueranschluß 9' des Schaltelements 3 verbunden. Ferner ist der Rückflußanschluß 15 des Durchflußverstärkers 2 mit dem Rückflußanschluß 15' bzw. 25 des Schaltelements 3 verbunden. Schließlich ist die Verteilerkammer 11' des Schaltelements 3 mit dem Medienanschluß 11 des Durchflußverstärkers 2 verbunden. Dem Anschluß 9 des Durchflußverstärkers 2 wird ein schwacher Medienstrom zugeführt, der durch den Durchflußverstärker in der beschriebenen Weise verstärkt und dem Ansteueranschluß 9' des Schaltelements 3 zugeführt wird.

Bei dem in Fig. 7 gezeigten Schaltzustand beaufschlagt das der Verteilerkammer 11' zugeführte Medium beide Ventilkammerabschnitte 70 und 76 des Doppelmembranventils 19, welches als Durchflußverstärker in gleicher Weise wie oben anhand von Fig. 6 beschrieben wirkt. Zugleich wird der Ventilkammerabschnitt 72 des Doppelmembranventils 20 beaufschlagt. Solange kein Druck über den Ansteueranschluß 9' zugeführt wird, wird der Schließkörper 12' gegen seinen Dichtsitz angedrückt; zugleich wird aber der Schließkörper 21 von dem Dichtsitz 22 abgehoben, so daß ein großer Medienstrom von der Verteilerkammer 11' zu dem ersten Auslaß 24 gelangt. Wenn dem Ansteueranschluß 9' des Schaltelements 3 ein durch den Durchflußverstärker 2 verstärkter Medienstrom zugeführt wird, nimmt der Druck in den Ventilkammerabschnitten 78, 80 gleichzeitig zu und beide Doppelmembranventile 19, 20 schalten um. Der Schließkörper 12' gibt nun den zugehörenden Dichtsitz frei, während der Schließkörper 21 gegen den Dichtsitz 22 gedrückt wird. Folglich wird die Verbindung zwischen der Verteilerkammer 11' und dem Ausgangsanschluß 24 geschlossen sowie zwischen der Verteilerkammer 11' und dem anderen Ausgangsanschluß 10' geöffnet. Folglich wird der relativ große Medienstrom, welcher der Verteilerkammer 11' zugeführt wird, je nach Schaltzustand des Schaltelements 3 dem Ausgangsanschluß 25 oder 10' zugeführt.

Wie schließlich in Fig. 8 gezeigt ist, kann das Schaltelement 3 auch umittelbar durch das Vorsteuerventil 1 angesteuert werden. Der Ausgangsanschluß 8 des Vorsteuerventils 1 wird bei dieser Ventilkombination mit dem Ansteueranschluß 9' des Schaltelements 3 verbunden. Der eine Medienanschluß 6 wird mit der Verteilerkammer 11' verbunden; der zweite Medienanschluß 2 des Vorsteuerventils 1 wird mit dem Rückflußanschluß 15' bzw. 25 des Schaltelements verbunden.

Zur Herstellung der Ventilkombination D in Fig. 1 werden die in den Fig. 6 und 7 gezeigten Anordnungen miteinander kombiniert. Der Durchflußverstärker 2 von Fig. 7 wird also in gleicher Weise wie in Fig. 6 gezeigt durch das Vorsteuerventil 1 angesteuert.

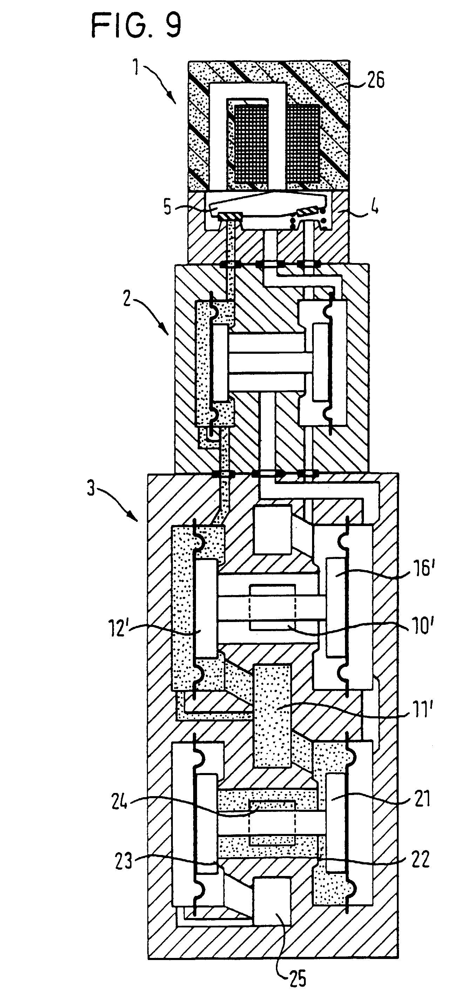

Die Fig. 9 schließlich zeigt, wie eine Kombination aus Vorsteuerventil 1, Durchflußverstärker 2 und Schaltelement 3 aufgebaut wird, indem diese Moduln einfach aneinandergefügt werden, wobei die Strömungsverbindungen durch korrespondierende Öffnungen in den aneinandergefügten Gehäuseflächen hergestellt werden.

## Patentansprüche

1. Ventilkombination aus mehreren miteinander kombinierbaren Ventilmoduln, zu denen ein Vorsteuerventil (1), wenigstens ein Durchflußverstärker (2) und ein Schaltelement (3) gehören, wobei die Module derart ausgestaltet sind, daß:
a) das Schaltelement (3) durch das Vorsteuerventil (1) ansteuerbar ist;
b) der Durchflußverstärker (2) durch das Vorsteuerventil (1) ansteuerbar ist;
c) das Schaltelement (3) über den Durchflußverstärker (2) durch das Vorsteuerventil (1) ansteuerbar ist; und
d) sowohl das Vorsteuerventil (1) als auch der Durchflußverstärker (2) und das Schaltelement (3) unmittelbar als Ventil betreibbar sind.

2. Ventilkombination nach Anspruch 1, dadurch gekennzeichnet, daß das Vorsteuerventil (1) wahlweise mit dem Durchflußverstärker (2) oder mit dem Schaltelement (3) und der Durchflußverstärker (2) sowohl mit dem Vorsteuerventil (1) als auch mit dem Schaltelement (3) unmittelbar zusammenfügbar ist.

3. Ventilkombination nach Anspruch 1 oder 2, dadurch gekennzeichnet, daß der Durchflußverstärker (2) aus einem Doppelmembranventil besteht, das folgenden Aufbau aufweist:
e) in einem Ventilgehäuse (2a) sind zwei durch einen Kanal (50) verbundene Dichtsitze (13, 14) mit ihren Dichtflächen voneinander fortweisend angeordnet;
f) den Dichtsitzen (13, 14) sind zwei starr miteinander gekoppelte Schließkörper (12, 16) zugeordnet, von denen jeweils der eine den zugeordneten Dichtsitz schließt, während der andere den zugeordneten Dichtsitz öffnet;
g) jeder Schließkörper (12, 16) ist in einer Ventilkammer (54, 58) angeordnet und an einer Membran (56, 60) eingespannt, welche diese Ventilkammer in zwei Abschnitte (54a, 54b bzw. 58a, 58b) unterteilt;
h) in der einen Ventilkammer (54) ist der von dem Kanal (50) abgewandte Ventilkammerabschnitt (54a) durch den zu verstärkenden Medienstrom beaufschlagbar;
i) beide Abschnitte (58a, 58b) der anderen Ventilkammer (58) sind mit einem zu schaltenden Medienstrom beaufschlagbar; und
j) der Kanal (50) hat einen Auslaß (10) für den verstärkten Medienstrom.

4. Ventilkombination nach Anspruch 3, dadurch gekennzeichnet, daß der Ventilkammerabschnitt (54b), der dem durch den zu verstärkenden Medienstrom beaufschlagbaren Ventilkammerabschnitt (54a) des Durchflußverstärkers (2) gegenüberliegt, mit einem Rückflußanschluß (15, 18) des Durchflußverstärkers verbunden ist.

5. Ventilkombination nach einem der vorstehenden Ansprüche, dadurch gekennzeichnet, daß das Schaltelement (3) aus zwei in einem gemeinsamen Ventilgehäuse (3a) angeordneten Doppelmembranventilen (19, 20) besteht, die folgenden Aufbau aufweisen:
k) in dem Ventilgehäuse (3a) sind zwei durch einen Kanal verbundene Dichtsitze (22, 23 bzw. 13', 14') mit ihren Dichtflächen voneinander fortweisend angeordnet;
l) den Dichtsitzen (22, 23 bzw. 13', 14') sind zwei starr miteinander gekoppelte Schließkörper (21, 21a bzw. 12', 16') zugeordnet, von denen jeweils der eine den zugeordneten Dichtsitz schließt, während der andere den zugeordneten Dichtsitz öffnet;
m) jeder Schließkörper (12', 16' bzw. 21, 21a) ist in einer Ventilkammer angeordnet und an einer Membran eingespannt, welche diese Ventilkammer in zwei Abschnitte unterteilt;
wobei:
n) zwei einander zugewandte Ventilkammerabschnitte (70, 72) der beiden Doppelmembranventile (19, 20) mit einer zwischen ihnen liegenden, in dem Ventilgehäuse (3a) gebildeten Verteilerkammer (11) verbunden sind, die mit einem zu schaltenden Medienstrom beaufschlagbar ist;
o) zwei benachbarte, jeweils von dem Kanal abgewandte Ventilkammerabschnitte (78, 80) der beiden Doppelmembranventile (19, 20) miteinander sowie mit einem Ansteuereingang (9') verbunden und durch einen ansteuernden Medienstrom beaufschlagbar sind;
und
p) die Kanäle der beiden Doppelmembranventile (19, 20) zwei Ausgänge (10', 24) haben, zu denen der zu schaltende Medienstrom selektiv durchschaltbar ist.

6. Ventilkombination nach Anspruch 5, dadurch gekennzeichnet, daß zwei einander zugewandte Ventilkammerabschnitte (82, 84) der beiden Doppelmembranventile (19, 20) jeweils mit einem Rückflußanschluß (15' bzw. 25) des Schaltelements (3) verbunden sind.

7. Ventilkombination nach einem der vorstehenden Ansprüche, dadurch gekennzeichnet, daß das Vorsteuerventil (1) eine mit einem Ausgangsanschluß (8) verbundene Ventilkammer und zwei in die Ventilkammer an je einem Dichtsitz ausmündende Medienanschlüsse (6, 7) aufweist, die durch zwei an einer Schaltwippe (5) befestigte Schließkörper (5a, 5b) abwechselnd geöffnet und geschlossen werden.

8. Ventilkombination nach den Ansprüchen 4 und 7, dadurch gekennzeichnet, daß der mit dem zu verstärkenden Medienstrom beaufschlagbare Ventilkammerabschnitt (54a) des Durchflußverstärkers (2) mit dem Ausgangsanschluß (8) des Vorsteuerventils (1), einer (6) der Medienanschlüsse des Vorsteuerventils (1) mit den durch den zu schaltenden Medienstrom beaufschlagbaren Ventilkammerabschnitten (58a, 58b) und der andere (7) Medienanschluß des Vorsteuerventils (1) mit dem Rückflußanschluß (18 bzw. 15) des Durchflußverstärkers (2) verbunden ist.

9. Ventilkombination nach den Ansprüchen 4 und 6 oder 6 und 8, dadurch gekennzeichnet, daß der Auslaß (10) des Durchflußverstärkers (2) mit dem Ansteuereingang (9') des Schaltelements (3), die Verteilerkammer (11') des Schaltelements (3) mit den durch den zu schaltenden Medienstrom beaufschlagbaren Ventilkammerabschnitten (58a, 58b) des Durchflußverstärkers (2) und der Rückflußanschluß (15 bzw. 18) des Durchflußverstärkers (2) mit den Rückflußanschlüssen (15' bzw. 25) des Schaltelements (3) verbunden ist.

10. Ventilkombination nach den Ansprüchen 6 und 7, dadurch gekennzeichnet, daß der Ausgang (8) des Vorsteuerventils (1) mit dem Ansteuereingang (9') des Schaltelements (3), einer der Medienanschlüsse (6) des Vorsteuerventils (1) mit der Verteilerkammer (11') und der andere Medienanschluß (7) mit den Rückflußanschlüssen (15' bzw. 25) des Schaltelements (3) verbunden ist.

11. Ventilkombination nach einem der vorstehenden Ansprüche, dadurch gekennzeichnet, daß die Medienverbindungen zwischen den Ventilmoduln (1, 2, 3) durch korrespondierende Öffnungen in aneinandergefügten Gehäuseflächen hergestellt sind.

## Claims

1. A valve combination of several valve modules which can be combined with one another, to which a pilot valve (1), at least one flow intensifier (2) and a switching element (3) belong, the modules being configured in such a manner that:
a) the switching element (3) can be triggered by the pilot valve (1);
b) the flow intensifier (2) can be triggered by the pilot valve (1);
c) the switching element (3) can be triggered by the pilot valve (1) via the flow intensifier (2); and
d) both the pilot valve (1) and also the flow intensifier (2) and the switching element (3) can be operated directly as valves.

2. A valve combination according to claim 1, characterized in that the pilot valve (1) can be selectively combined directly with the flow intensifier (2) or with the switching element (3) and the flow intensifier (2) can be combined directly both with the pilot valve (1) and also with the switching element (3).

3. A valve combination according to claim 1 or 2, characterized in that the flow intensifier (2) consists of a double-diaphragm valve, which has the following construction:
e) disposed in a valve housing (2a) are two sealing seats (13, 14) connected by a duct (50), with their sealing faces pointing away from one another;
f) associated with the sealing seats (13, 14) are two closing elements (12, 16) rigidly coupled to one another, of which respectively the one closes its associated sealing seat, while the other opens its associated sealing seat;
g) each closing element (12, 16) is disposed in a valve chamber (54, 58) and is mounted at a diaphragm (56, 60), which divides this valve chamber into two portions (54a, 54b and 58a, 58b respectively);
h) in the one valve chamber (54) the valve chamber portion (54a) faced away from the duct (50) can be impinged by the media stream to be intensified;
i) both portions (58a, 58b) of the other valve chamber (58) can be impinged by a media stream to be switched; and
j) the duct (50) has an outlet (10) for the intensified media stream.

4. A valve combination according to claim 3, characterized in that the valve chamber portion (54b), which lies opposite the valve chamber portion (54a) of the flow intensifier (2) which can be impinged by the media stream to be intensified, is connected to a backflow connection (15, 18) of the flow intensifier.

5. A valve combination according to one of the preceding claims, characterized in that the switching element (3) consists of two double-diaphragm valves (19, 20) disposed in a common valve housing (3a), which have the following construction:
k) disposed in the valve housing (3a) are two sealing seats (22, 23 and 13', 14' respectively) connected by a duct, with their sealing faces pointing away from one another;
l) associated with the sealing seats (22, 23 and 13', 14' respectively) are two closing elements (21, 21a and 12', 16' respectively) which are rigidly coupled with one another, of which respectively the one closes its associated sealing seat, while the other opens its associated sealing seat;
m) each closing element (12', 16' and 21, 21a respectively) is disposed in a valve chamber and mounted at a diaphragm which divides this valve chamber into two portions;
wherein:
n) two valve chamber portions (70, 72), faced towards one another, of the two double-diaphragm valves (19, 20) are connected to a distribution chamber (11) which lies between them and is formed in the valve housing (3a) and which can be impinged by a media stream to be switched;
o) two adjacent valve chamber portions (78, 80), which are each faced away from the duct, of the two double-diaphragm valves (19, 20) are connected to one another and also to a control input (9') and can be impinged by a controlling media stream;
and
p) the ducts of the two double-diaphragm valves (19, 20) have two outputs (10', 24), to which the media stream to be switched can be selectively connected.

6. A valve combination according to claim 5, characterized in that two valve chamber portions (82, 84), faced towards one another, of the two double-diaphragm valves (19, 20) are each connected to a backflow connection (15' and 25 respectively) of the switching element (3).

7. A valve combination according to one of the preceding claims, characterized in that the pilot valve (1) comprises a valve chamber connected to an output connection (8) and two media connections (6, 7) opening into the valve chamber at a respective sealing seat, which media connections are alternately opened and closed by two closing elements (5a, 5b) attached to a rocker (5).

8. A valve combination according to claims 4 and 7,
characterized in that the valve chamber portion (54a) of the flow intensifier (2) which can be impinged by the media stream to be intensified is connected to the output connection (8) of the pilot valve (1), one (6) of the media connections of the pilot valve (1) is connected to the valve chamber portions (58a, 58b) to be impinged by the media stream to be switched and the other (7) media connection of the pilot valve (1) is connected to the backflow connection (18 and 15 respectively) of the flow intensifier (2).

9. A valve combination according to claims 4 and 6 or 6 and 8, characterized in that the outlet (10) of the flow intensifier (2) is connected with the control input (9') of the switching element (3), the distribution chamber (11') of the switching element (3) is connected with the valve chamber portions (58a, 58b) of the flow intensifier (2) which can be impinged by the media stream to be switched, and the backflow connection (15 and 18 respectively) of the flow intensifier (2) is connected to the backflow connections (15' and 25 respectively) of the switching element (3).

10. A valve combination according to claims 6 and 7,
characterized in that the output (8) of the pilot valve (1) is connected with the control input (9') of the switching element (3), one of the media connections (6) of the pilot valve (1) is connected with the distribution chamber (11') and the other media connection (7) is connected with the backflow connections (15' and 25 respectively) of the switching element (3).

11. A valve combination according to one of the preceding claims, characterized in that the media connections between the valve modules (1, 2, 3) are produced by corresponding apertures in housing faces added to one another.

## Revendications

1. Combinaison de soupapes comprenant plusieurs modules de soupape pouvant être combinés les uns aux autres et comportant une soupape pilote (1), au moins un amplificateur de débit (2) et un élément de commutation (3), les modules étant configurés de telle sorte:
a) l'élément de commutation (3) peut être excité par la soupape pilote (1) ;
b) l'amplificateur de débit (2) peut être excité par la soupape pilote (1) ;
c) l'élément de commutation (3) peut être excité par la soupape pilote (1) par l'intermédiaire de l'amplificateur de débit (2) ; et
d) aussi bien la soupape pilote (1) que l'amplificateur de débit (2) et l'élément de commutation (3) peuvent être utilisés directement en tant que soupape.

2. Combinaison de soupapes selon la revendication 1, caractérisée en ce que la soupape pilote (1) peut être assemblée directement soit avec l'amplificateur de débit (2) soit avec l'élément de commutation (3), et l'amplificateur de débit (2) aussi bien avec la soupape pilote (1) qu'avec l'élément de commutation (3).

3. Combinaison de soupapes selon la revendication 1 ou 2, caractérisée en ce que l'amplificateur de débit (2) est une soupape à double diaphragme présentant la structure suivante :
e) dans un corps de soupape (2a) sont disposés deux sièges d'étanchéité (13, 14) reliés par un canal (50), leurs surfaces d'étanchéité étant orientées à l'opposé l'une de l'autre;
f) aux sièges d'étanchéité (13, 14) sont associés deux corps de fermeture (12, 16) rigidement accouplés l'un à l'autre, dont respectivement l'un ferme le siège d'étanchéité associé, tandis que l'autre ouvre le siège d'étanchéité associé ;
g) chaque corps de fermeture (12, 16) est disposé dans une chambre de soupape (54, 58) et serré sur un diaphragme (56, 60) qui divise la chambre de soupape en deux sections (54a, 54b ou 58a, 58b) ;
h) dans l'une des chambres de soupape (54), la section de chambre de soupape (54a) opposée au canal (50) peut être alimentée par le courant de fluide à amplifier ;
i) les deux sections (58a, 58b) de l'autre chambre de soupape (58) peuvent être alimentées par un courant de fluide à mettre en circuit ; et
j) le canal (50) présente un écoulement (10) pour le courant de fluide amplifié.

4. Combinaison de soupapes selon la revendication 3, caractérisée en ce que la section de chambre de soupape (54b) faisant face à la section de chambre de soupape (54a) de l'amplificateur de débit (2) et pouvant être alimentée par le courant de fluide à amplifier est reliée à une prise de refoulement (15, 18) de l'amplificateur de débit.

5. Combinaison de soupapes selon l'une des revendications précédentes, caractérisée en ce que l'élément de commutation (3) comprend deux soupapes à double diaphragme (19, 20) disposées dans un corps de soupape (3a) commun et présentant la structure suivante :
k) dans le corps de soupape (3a) sont disposés deux sièges d'étanchéité (22, 23 ou 13', 14') reliés par un canal, leurs surfaces d'étanchéité étant orientées à l'opposé l'une de l'autre;
l) aux sièges d'étanchéité (22, 23 ou 13', 14') sont associés deux corps de fermeture (21, 21a ou 12', 16') rigidement accouplés l'un à l'autre, dont respectivement l'un ferme le siège d'étanchéité associé, tandis que l'autre ouvre le siège d'étanchéité associé ;
m) chaque corps de fermeture (12', 16' ou 21, 21a) est disposé dans une chambre de soupape et serré sur un diaphragme qui divise cette chambre de soupape en deux sections ;
où :
n) deux sections de chambre de soupape (70, 72) se faisant face, des deux soupapes à double diaphragme (19, 20) sont reliées à une chambre de distribution (11) située entre elles, agencée dans le corps de soupape (3a) et pouvant être alimentée par le courant de fluide à mettre en circuit;
o) deux sections de chambre de soupape (78, 80) voisines, opposées au canal, des deux soupapes à double diaphragme (19, 20) sont reliées l'une à l'autre ainsi qu'à une entrée d'excitation (9') et peuvent être alimentées par un courant de fluide d'excitation ;
et :
p) les canaux des deux soupapes à double diaphragme (19, 20) présentent deux sorties (10', 24) vers lesquelles le courant de fluide à mettre en circuit peut être dirigé de façon sélective.

6. Combinaison de soupapes selon la revendication 5, caractérisée en ce que deux sections de chambre de soupape (82, 84) se faisant face, des deux soupapes à double diaphragme (19, 20) sont respectivement reliées à une prise de refoulement (15' ou 25) de l'élément de commutation (3).

7. Combinaison de soupapes selon l'une des revendications précédentes, caractérisée en ce que la soupape pilote (1) présente une chambre de soupape reliée à une prise de sortie (8) et deux prises de fluide (6, 7) débouchant dans la chambre de soupape sur respectivement un siège d'étanchéité, et qui sont ouvertes et fermées en alternance par deux corps de fermeture (5a, 5b) fixés sur une bascule de commutation (5).

8. Combinaison de soupapes selon les revendications 4 et 7, caractérisée en ce que la section de chambre de soupape (54a) de l'amplificateur de débit (2) pouvant être alimentée par le courant de fluide à amplifier est reliée à la prise de sortie (8) de la soupape pilote (1), l'une (6) des prises de fluide de la soupape pilote (1) est reliée aux sections de chambre de soupape (58a, 58) pouvant être alimentées par le courant de fluide à mettre en circuit, et l'autre (7) prise de fluide de la soupape pilote (1) est reliée à la prise de refoulement (18 ou 15) de l'amplificateur de débit (2).

9. Combinaison de soupapes selon les revendications 4 et 6 ou 6 et 8, caractérisée en ce que l'écoulement (10) de l'amplificateur de débit (2) est relié à l'entrée d'excitation (9') de l'élément de commutation (3), la chambre de distribution (11') de l'élément de commutation (3) est reliée aux sections de chambre de soupape (58a, 58b) de l'amplificateur de débit (2) pouvant être alimentées par le courant de fluide à mettre en circuit, et la prise de refoulement (15 ou 18) de l'amplificateur de débit (2) est reliée aux prises de refoulement (15' ou 25) de l'élément de commutation (3).

10. Combinaison de soupapes selon les revendications 6 et 7, caractérisée en ce que la sortie (8) de la soupape pilote (1) est reliée à l'entrée d'excitation (9') de l'élément de commutation (3), l'une des prises de fluide (6) de la soupape pilote (1) est reliée à la chambre de distribution (11'), et l'autre prise de fluide (7) est reliée aux prises de refoulement (15' ou 25) de l'élément de commutation (3).

11. Combinaison de soupapes selon l'une des revendications précédentes, caractérisée en ce que les liaisons de fluide entre les modules de soupape (1, 2, 3) sont réalisées par des ouvertures correspondantes situées sur des surfaces de corps assemblées.
